# EUROPEAN PATENT SPECIFICATION

(11) **EP 4 080 342 B1**
(45) Date of publication and mention of the grant of the patent: **15.07.2026**
(21) Application number: 21195545.5
(22) Date of filing: 08.09.2021
(51) Int. Cl.: G06F 3/12

(54) **INFORMATION PROCESSING SYSTEM, PROGRAM AND INFORMATION PROCESSING METHOD**
INFORMATIONSVERARBEITUNGSSYSTEM, PROGRAMM UND INFORMATIONSVERARBEITUNGSVERFAHREN
SYSTÈME DE TRAITEMENT D'INFORMATIONS, PROGRAMME ET PROCÉDÉ DE TRAITEMENT D'INFORMATIONS

(30) Priority: 19.04.2021 JP 2021070470
(43) Date of publication of application: 26.10.2022
(73) Proprietor: Fujifilm Business Innovation Corp., Tokyo (JP)
(72) Inventor: Matsui, Haruki, Yokohama-shi, Kanagawa (JP)
(74) Representative: Haseltine Lake Kempner LLP

(56) References cited:
- US-A1- 2018 101 665

## Description

### Background

### Technical Field

The present invention relates to an information processing system, a program and an information processing method.

### Related Art

In the related art, various techniques related to cooperation between a service and a device provided via a network have been proposed.

Patent Literature 1 discloses an information processing system, the information processing system includes a device and an information processing apparatus connected to the device via a network, and includes a service information storage unit that stores service identification information that identifies a service provided for the device in association with program identification information that identifies a program required to be installed on the device in association with provision of the service, a corresponding setting unit that stores device identification information and service identification information in a corresponding information storage unit in response to reception of a service usage request in which the device identification information that identifies the device and the service identification information are specified, a communication unit that requests the device related to the device identification information specified in the usage request to install the program related to the program identification information stored in the service information storage unit in association with the service identification information specified in the usage request, and a program management unit that returns the program related to the program identification information specified in an acquisition request in response to the acquisition request of the program from the device receiving an installation request, and the program causes the device to transmit information related to the device.
Further, document US 2018/0101665 A1 discloses an information processing apparatus connected to a device and a server via a network includes a license-information acquiring unit, an installedinformation acquiring unit, a display controller, and an execution controller. The license information acquiring unit acquires information related to an application software license from the server. The installed information acquiring unit acquires, from the device, information related to installed application software installed in the device. The display controller performs control so as to display image information expressing the acquired installed application software. The execution controller executes the application software by receiving a command from a user for an operation related to the application software, which is performed by using the displayed image information. The execution controller controls an operation performable by the user with respect to the installed application software based on license information acquired by the installed information acquiring unit.

### Citation List

### Patent Literature

Patent Literature 1: Japanese Patent No. 5987656

### Summary

An information processing system, a program and an information processing method according to the invention are defined in the independent claims. Preferred features are defined in the dependent claims.

According to the invention as claimed, the application to be deleted from the device used by the user may be specified according to the service use situation of the user.

Further, it is possible to specify the application to be deleted in a group unit of the user.

In an embodiment, it is possible to specify the application to be deleted in a group unit of the device.

### Brief Description of the Drawings

Exemplary embodiment(s) of the present invention will be described in detail based on the following figures, wherein:
Fig. 1 is an overall configuration diagram of a system according to an exemplary embodiment;
Fig. 2 is a configuration diagram of a software management system according to the exemplary embodiment;
Fig. 3 is a processing flowchart (part 1) of the exemplary embodiment;
Fig. 4 is a processing flowchart (part 2) of the exemplary embodiment;
Fig. 5 is a screen explanatory diagram according to the exemplary embodiment; and
Fig. 6 is a processing flowchart (part 3) of the exemplary embodiment.

### Detailed Description

Hereinafter, an exemplary embodiment of the present invention will be described with reference to the drawings.

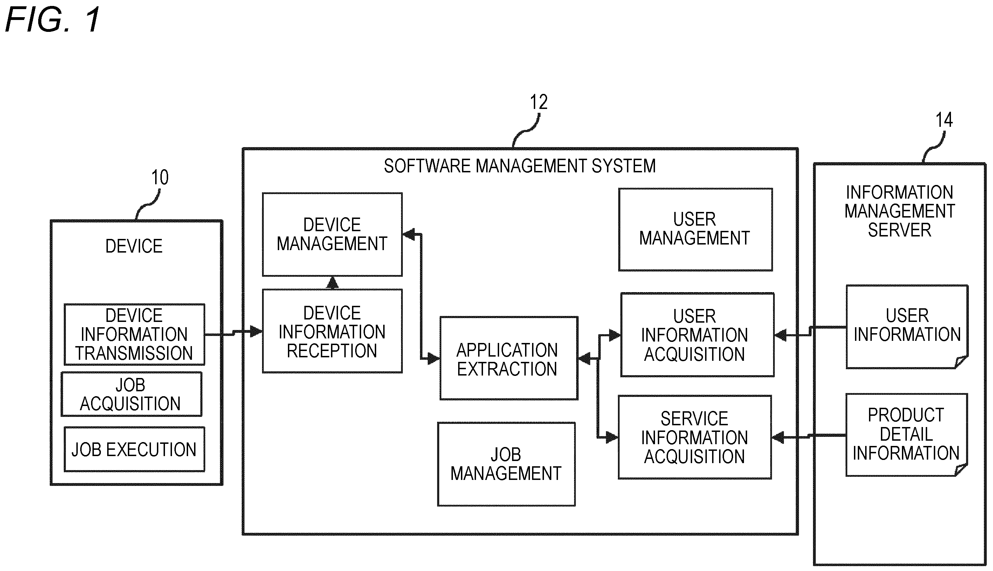

Fig. 1 shows an overall configuration of an information processing system according to the present exemplary embodiment. The information processing system includes a device 10, a software management system 12, and an information management server 14.

The device 10 is an image forming device such as a multifunction device having various functions such as a copy, a printer, a fax, and a scanner, and includes a device information transmission unit, a job acquisition unit, and a job execution unit as functional blocks.

The device information transmission unit transmits device information including information of an application (hereinafter, appropriately abbreviated as "App") installed in the device to the software management system 12. Specifically, the device information transmission unit transmits a device ID that is an identifier that uniquely specifies the device, a name of the installed application, and version information.

The job acquisition unit acquires a job to be executed. The job to be executed is received from the software management system 12.

The job execution unit executes a job acquired by the job acquisition unit.

The software management system 12 is configured by a cloud server or the like, and is connected to the device 10 via a wired or wireless communication network. The communication network may be a dedicated line or a public line. Examples of the communication network include, but are not limited to, a LAN or the Internet. The software management system 12 functions as an information processing apparatus, and includes a device management unit, a device information reception unit, an application extraction unit, a job management unit, a user management unit, a user information acquisition unit, and a service information acquisition unit as the functional blocks.

The device information reception unit periodically receives the device information including the information of the installed application from the device 10.

The device management unit manages the device information received by the device information reception unit.

The user information acquisition unit acquires user information that is information of a user registered as a using user in the device from the information management server 14.

The user management unit manages the user information acquired by the user information acquisition unit.

The service information acquisition unit acquires information such as a registration place of an application of a service from the information management server 14. An example of the registration place of the application of the service is a URL, but is not limited thereto.

The application extraction unit extracts (specifies) an application to be installed in the device 10, an application to be deleted from the device 10, and an application to be updated in the device 10, by using the device information, the user information, and service information.

That is, the application extraction unit uses the device ID, the installed application, and the version information thereof included in the device information, a user name and a contract service name included in the user information, a service name, a target model, and the URL of the application included in the service information, and associates the device, the installed application, the version thereof, the user of the device, a contract service of the user, a release date and the URL of the application required for the contract service, and determines the application to be installed in the device 10, the application to be deleted from the device 10, and the application to be updated in the device 10 using the association. The user name and the contract service name included in the user information, the service name, the target model, and the URL of the application included in the service information are examples of information indicating a service contract situation.

For example, as follows.
(Device Information of Device 10)
Installed application: Application a and Application c,
Version: 1.0 User: User U1 and User U2,
(User Information)
Contract Service of User U1: Ser.1
Contract Service of User U2: Ser.2
(Service Information)
Application required to provide Service Ser.1: Version 2.0 of Application a
Application required to provide Service Ser.2: Version 1.0 of Application b

At this time, the application extraction unit determines that the application a required for the service Ser.1 contracted by the user U1 registered as the using user on the device 10 is installed in the device 10, but the version is 1.0 instead of 2.0, and extracts the application a as the application to be updated in the device 10. In addition, it is determined that the application b required for the service Ser.2 contracted by the user U2 registered as the using user on the device 10 is not set, and the application b is extracted as the application to be installed in the device 10. Further, it is determined that the application c is not the application required for any of contract services of the user U1 and the user U2 registered as the using user on the device 10, and the application c is extracted as the application to be deleted from the device 10.

The job management unit manages execution (installation, deletion, and update) of a job to the device of the application extracted by the application extraction unit. Specifically, the job includes the device ID, a list of IDs of the application to be installed in the device 10, a list of IDs of the application to be deleted from the device 10, a list of IDs of the application to be updated in the device, or the like. The job management unit transmits a created job to the device 10.

The information management server 14 is configured by the cloud server or the like, and is connected to the software management system 12 via the wired or wireless communication network. The information management server 14 includes a user information storage unit and a product detail information storage unit.

The user information storage unit stores the user name and a contract service list (a list of service IDs) as the user information. The user information stored in the user information storage unit is transmitted from the information management server 14 to the software management system 12.

The product detail information storage unit stores the service name, the service ID, the version, the release date, the target model, the URL of the device application, or the like as the service information. The service information stored in the product detail information storage unit is transmitted from the information management server 14 to the service information acquisition unit of the software management system 12.

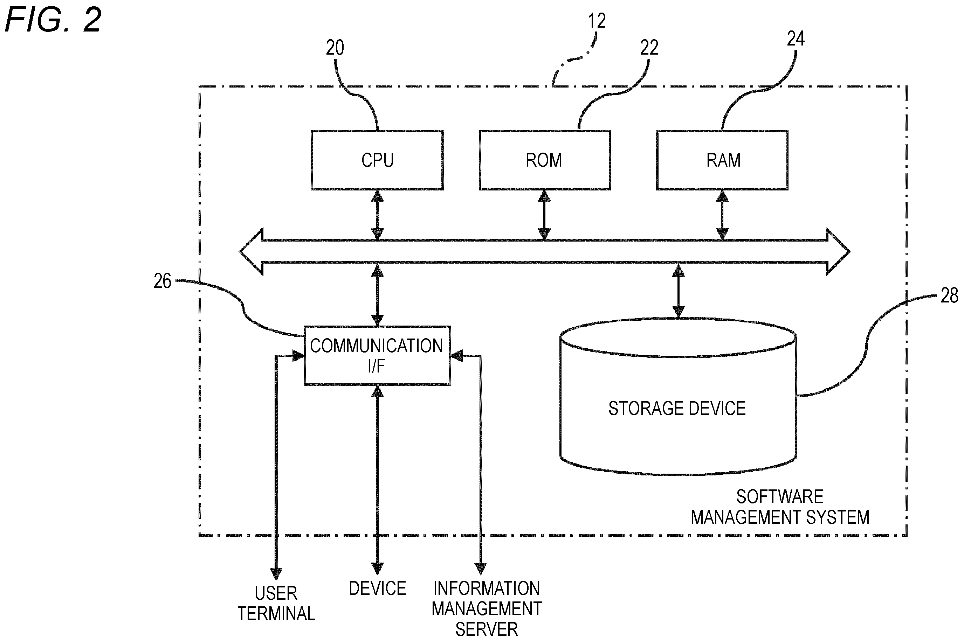

Fig. 2 shows a configuration diagram of the software management system 12. The software management system 12 is configured by the cloud server, and includes a CPU 20, a ROM 22, a RAM 24, a communication interface (I/F) 26, and a storage device 28, and these devices are connected such that data may be transmitted and received via a bus.

In the present exemplary embodiment, the CPU 20 functions as a first processor, reads a processing program stored in the ROM 22 or other program memories, and executes the program using the RAM 24 as a working memory, thereby implementing the application extraction unit, the user information acquisition unit, and the service information acquisition unit.

Under control of the CPU 20, the communication I/F 26 transmits and receives to/from the device 10 and the information management server 14, and also transmits and receives to/from a user terminal (not shown). The communication I/F 26 receives the device information from the device 10 and transmits the job to the device 10. The communication I/F 26 receives the user information and the service information from the information management server 14. Further, the communication I/F 26 receives information of the device for which the application is to be managed and a display request of an application management screen from the user terminal. The user terminal is a terminal used by an administrator who manages and operates the device 10, and may function as an administrator terminal. The CPU 20 of the software management system 12 extracts the applications to be installed in the device 10, to be deleted from the device 10, and to be updated in the device 10 in response to the display request of the application management screen from the user terminal, and returns an extraction result to the user terminal.

The storage device 28 includes a hard disk drive (HDD), a solid state drive (SSD), or the like, and stores the acquired device information, user information, and service information. In addition, the job created by the CPU 20 is stored and managed. The storage device 28 implements the device management unit, the user management unit, and the job management unit.

The device 10 has a known configuration as the image forming device, and includes a controller including the CPU, the ROM, the RAM, or the like, the scanner, the printer, a modem, an operation panel, and the communication I/F. In the present exemplary embodiment, the CPU functions as a second processor, and executes the program stored in the ROM or the other memories, thereby implementing the device information transmission unit, the job acquisition unit, and the job execution unit. That is, the CPU transmits the device ID, the installed application, and the version to the software management system 12 via the communication I/F as the device information. In addition, the job is received from the software management system 12, and the received job is executed to install, delete, and update the application.

As described above, in the present exemplary embodiment, the device 10, the software management system 12, and the information management server 14 cooperate to manage installation, deletion, and update of the application of the device 10. When the user registered as the using user on the device 10 changes, the installation, deletion, and update of the application of the device 10 also change in accordance with the change of the user. In addition, even when a contract situation changes even if the user of the device 10 does not change, the installation, deletion, and update of the application of the device 10 also dynamically change in accordance with the change in the contract situation.

In the technique described in Patent Literature 1, a required application is installed from the cloud at a start of using the service for the device selected by the user. However, when the required application is installed on the device from the cloud, it is troublesome since the user needs to perform an instruction such as explicitly installing the application by the number of the services on each device.

On the other hand, in the present exemplary embodiment, an efficient and lean management is possible by collectively managing the installation, deletion, and update of the application according to installed application information in the device 10 and a service contract situation of the user.

It is assumed that the application installed on the device 10 is usually managed and operated by the administrator of the device 10, and the administrator also understands service contract contents of the using user who uses the device 10, but it is difficult to grasp in detail individual applications and the versions thereof required when using the contract service, and the present exemplary embodiment is particularly useful in such cases.

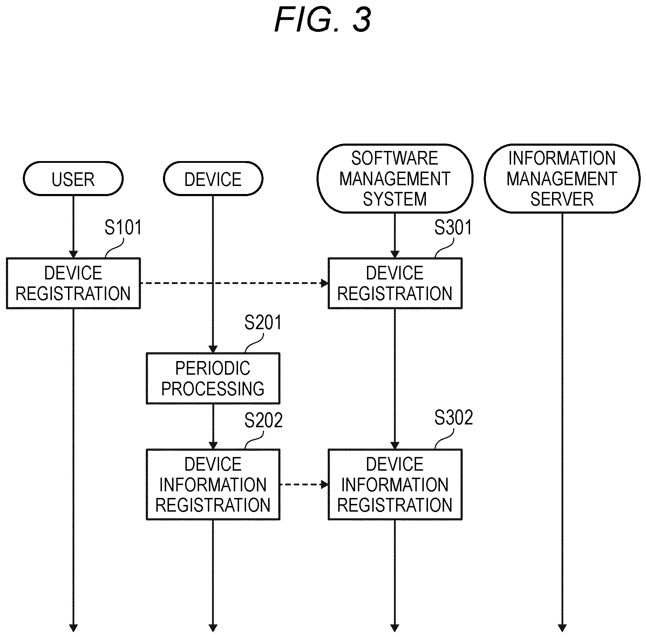

Figs. 3, 4, and 6 show processing flowcharts of the present exemplary embodiment. The processing flowchart is a processing flowchart of the user (user terminal), the device 10, the software management system 12, and the information management server 14. The user performs processing by operating the user terminal. The user terminal is connected to the software management system 12 via the wired or wireless communication network.

First, as shown in Fig. 3, the user operates the user terminal to register a device to be managed in the software management system 12 (S101).

The device information transmission unit of the device 10 executes a predetermined periodic processing by executing the program (S201), and transmits the device information to the software management system 12 and registers the device information (S202). The device information includes the device ID, installed application information and version information. The device ID may include an IP address of the device in addition to the name of the device. The software management system 12 receives device registration information from the user terminal, registers the device (S301), and registers the device information periodically received from the device 10 in association with the registered device (S302).

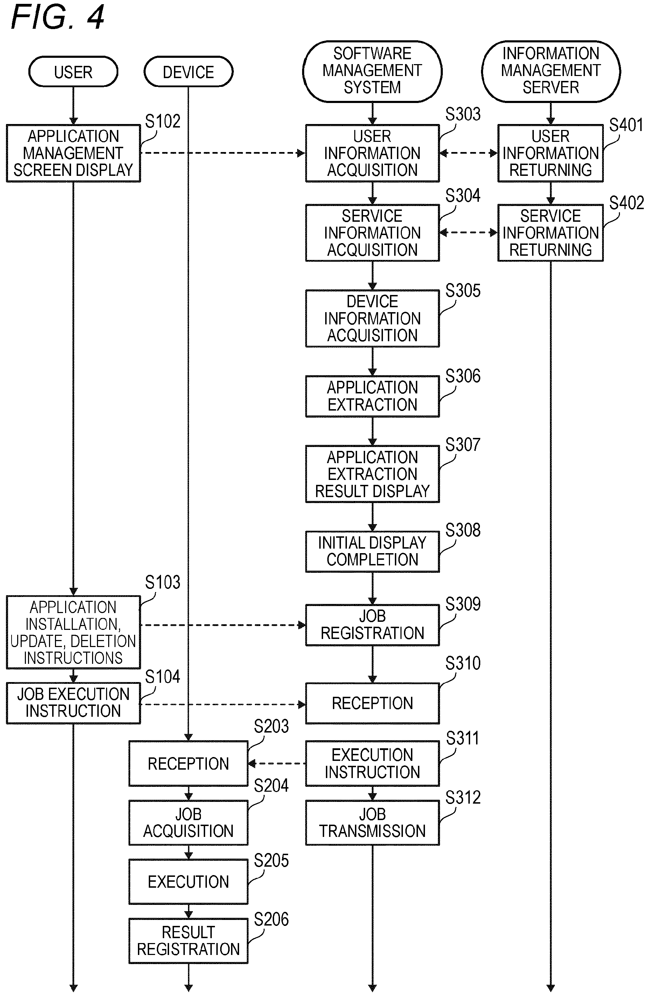

Next, with reference to Fig. 4, the user operates the user terminal to display the application management screen on the terminal. Accordingly, the user terminal outputs the display request of a management screen to the software management system 12 (S102).

In response to the display request from the user terminal, the software management system 12 accesses the information management server 14 to request the user information. In response to the request, the information management server 14 reads the user information from the user information storage unit and returns the user information to the software management system 12 (S401). The user information acquisition unit of the software management system 12 receives the user information returned from the information management server 14 and outputs the received user information to the application extraction unit (S303).

In response to the display request from the user terminal, the software management system 12 accesses the information management server 14 to request the service information. In response to the request, the information management server 14 reads the service information from the product detail information storage unit and returns the service information to the software management system 12 (S402). The service information acquisition unit of the software management system 12 receives the service information returned from the information management server 14 and outputs the service information to the application extraction unit (S304).

Next, the application extraction unit of the software management system 12 acquires the device information registered in the device management unit (S305), and extracts the application to be installed, the application to be deleted, and the application to be updated in the device 10 using the device information, the user information, and the service information (S306). Specifically, the device information includes:
·the device ID
·the installed application, and
·the version.
The user information includes:
- the user name, and
- the contract service list.
The service information includes:
·the service name,
·the service ID,
·the version,
·the release date,
·the target model,
·the URL of the device application.
The registration information of user registered as the user of the device 10 may be included in the device information or may be included in the user information. The user who is the administrator of the device 10 may register the user when registering the device 10.

The application extraction unit compares the application required for the service contracted by the user with the installed application in the device 10, and extracts the application not yet installed in the device 10, which is the application required for the service contracted by the user registered as the using user on the device 10, as the application to be installed. When the application required for the service contracted by the user registered as the using user on the device 10 is installed in the device 10 but the version of the application is old, the application is extracted as the application to be updated. Further, the installed application in the device 10, which is not the application required for the service contracted by the user registered as the using user on the device 10 is extracted as the application to be deleted.

If the number of users who use the device 10 is one, the application not yet installed in the device, which is the application required for the service contracted by the user, is extracted as the application to be installed. If there are plural users who use the device 10, it is desirable to extract, as the application to be installed, the application not yet installed in the device 10, which is the application required for the service contracted by any one of the plural users. For example, users A, B, C, and D exist as the users who use the device 10, if the application required for the service contracted only by the user A and not contracted by the users B, C, and D is not yet installed in the device 10, the application is extracted as the application to be installed.

As a result, even if any one or all of the users B, C, and D later contract the service contracted by the user A, the application required for the service is already installed in the device 10, and therefore, the users B, C, and D may promptly receive a provision of the service by using the device 10.

In addition, if the number of the users who use the device 10 is one, the application installed in the device 10, which is not the application required for the service contracted by the user, is extracted as the application to be deleted.
If there are the plural users who use the device 10, the application installed in the device 10, which is not the application required for the service contracted by any one of the plural users, is extracted as the application to be deleted. That is, the application required for the service contracted by any of the plural users is not extracted as the application to be deleted from the application installed in the device 10. For example, if the users A, B, C, and D exist as the users who use the device 10, the application required for the service is contracted only by the user A and not contracted by the users B, C, and D, even if the users B, C, and D does not use the application, the application is not extracted as the application to be deleted.

As a result, it is possible to eliminate a state in which an unrequired application that is not used by anyone is installed in the device 10.

When the application extraction unit extracts the application to be installed, the application to be deleted, and the application to be updated, the extraction result is returned to the user terminal for each device and displayed (S307), and an initial display is completed (S308).

The user terminal receives the extraction result of the application returned from the software management system 12 and displays the extraction result on a display device of the terminal. The display device displays a list of the applications for the installation, deletion, and update for each device.

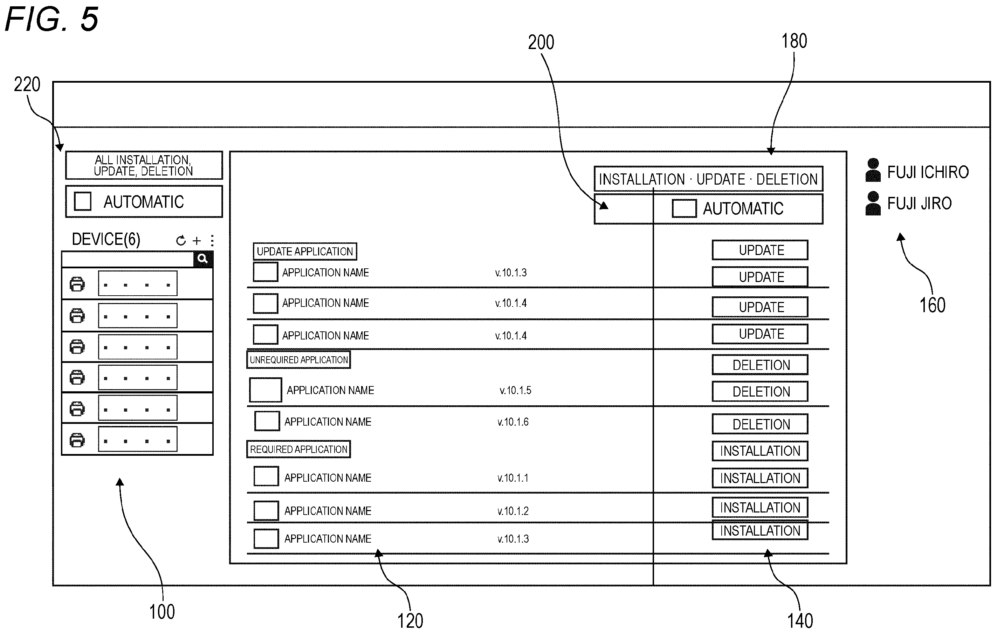

Fig. 5 illustrates an example of a screen of the application extraction result (initial display) displayed on the user terminal.

A list 100 of the devices 10 is displayed on a left part of the screen. The list 100 of the devices 10 includes the device registered by the user. In the device information, the device name and the IP address as the device IDs are displayed. Now, it is assumed that the device displayed at a top among the displayed list 100 is selected by the user by an operation of an input device such as a mouse, for example. In Fig. 5, the selected device is highlighted.

A list 120 of "update application", "unrequired application", and "required application" of the device selected by the user is displayed at a center of the screen. The "update application" indicates the application to be updated for the selected device, the "unrequired application" indicates the application to be deleted for the selected device, and the "required application" indicates the application to be installed for the selected device.

Each application for "update", "non-required", and "installation" may be one or plural applications, and may be zero when there is no application. In a case where the application of the latest version is installed in the selected device without excess or deficiency, each application for "update", "non-required", and "installation" may be zero. On a right side of each application, operation buttons 140 for "update", "deletion", and "installation" are displayed corresponding to each application. The user may set "update", "deletion", and "installation" for each application by operating these operation buttons 140.

In addition to the operation buttons 140 for "update", "deletion", and "installation" corresponding to each application, a collective operation button 180 for "installation · update · deletion" is displayed in an upper part of the center of the screen. By operating the collective button 180, the user may collectively set "update", "deletion", and "installation" to all the applications.

In addition to the collective operation button 180, an automatic button 200 is displayed. When the user checks a checkbox of the automatic button 200, the information is periodically transmitted and received between the device and the software management system, and the update application, the unrequired application, and the installation application are automatically updated and displayed.

On the right side of the screen, a list 160 of the users registered as the using users on the selected device is displayed. The user registered as the using user on the device includes all persons who use the selected device and also includes the administrator who manages the device.

Further, on an upper part of a left part of the screen, a total installation · update · deletion button 220 is displayed. When the user operates the button 220, the state is the same as when the automatic button 200 is operated for all the devices.

While visually recognizing this screen, the user sets the installation, deletion, and update of the application for each device or for all the devices, and requests the software management system 12. Referring back to Fig. 4 again, the user visually recognizes a screen example shown in Fig. 5, operates the user terminal, and instructs the software management system 12 to install, update, and delete the application (S103).

The software management system 12 registers the job in response to the instruction from the user terminal (S309), receives a job execution in response to a job execution instruction (S104) from the user terminal (S310), and instructs the device 10 to execute the job (S311). Job information includes:
·the device ID,
·a list of IDs of the installation application,
·a list of IDs of the update application, and
·a list of IDs of the deletion application.

When receiving the job execution instruction from the software management system 12, the device 10 receives the job execution instruction (S203), acquires the job (S204), and executes the job (S205).

As a technique that immediately gives an instruction directly to the local device 10 from the software management system 12 configured by the cloud server or the like, for example, there is a method of installing and starting a Web application that receives the instructions on the device 10 and opening a screen of this Web application from a browser screen of the software management system 12 to give the instructions, but any other technique may be adopted.

When the device 10 acquires and executes the job, that is, executes the installation of the installation application, the deletion of the unrequired application, and the update of the update application, the result is registered as new device information (S206).

That is, when there is the list of the IDs of the installation applications, the CPU of the device 10 downloads and installs the installation application based on the URL of the installation application specified by the ID of the installation application. At this time, the installation application may be downloaded via the software management system 12. The same applies to a case where there is the list of the IDs of the update applications. When there is an ID list of the deletion application, the application specified by the ID of the deletion application is deleted from the device 10.

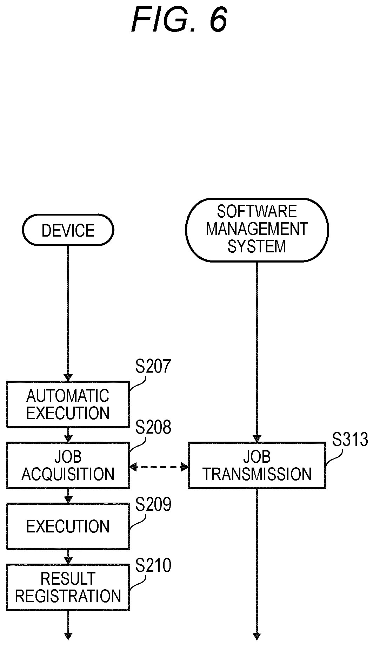

Next, in Fig. 6, when the user operates the automatic button 200 or 220 of the user terminal, the acquired job is automatically executed. That is, the device 10 and the software management system 12 transmit and receive the job information (S208 and S313), and the device 10 periodically executes the job (S209), performs the installation of the installation application, the deletion of the unrequired application, and the update of the update application, and registers the result as the device information (S210). An automatic execution of the job is to execute the job regardless of the job execution instruction from the user.

As described above, in the present exemplary embodiment, the application to be installed, the application to be deleted, and the application to be updated in the device are automatically extracted and provided according to the service contract situation of the user registered as the using user for each device, and therefore the user may easily manage and operate the application of the device, appropriately.

**In** the present exemplary embodiment, when the plural users are registered for each device, the installation, deletion, and update of the application of the device are managed according to the service contract situation of the plural users, and the users may be grouped and the installation, deletion, and update of the applications may be managed on a group unit.

Specifically, for example, the plural users are grouped and registered as a use group of the devices. Then, the application not yet installed in the device, which is the application required for providing the service contracted by at least one user among the users belonging to the group, is extracted as the application to be installed. Further, if the application is required for the service contracted by the user belonging to the group and is installed in the device 10 but the version is old, the application is extracted as the application to be updated. Further, the installed application in the device 10, which is not the application required for the service contracted by the user belonging to the group, is extracted as the application to be deleted.

As grouping of the plural users, for example, the user registered as the using user on the device and a user not registered as the using user may be grouped as the same group. **In** such a case, the application not yet installed in the device, which is the application required for providing the service contracted by the user not registered as the using user on the device 10, but belonging to the group registered as the use group, is extracted as the applications to be installed.

**In** addition, instead of the grouping the users, or in addition to the grouping of the users, plural devices may be grouped, and the installation, deletion, and update of the applications may be managed on the group unit.

Specifically, the application not installed in any of the devices belonging to the group, which is the application required for grouping the plural devices and providing the service contracted by the at least one user registered as the using user on at least one device belonging to the group, is extracted as the application to be installed in all the devices belonging to the group. That is, there are a device a, a device b, and a device c as the devices belonging to the group, and the application not installed in any of the devices a, b, and c, which is the application required for providing the service contracted by the user registered as the using user on the device a, is extracted as the applications to be installed in all the devices a, b, and c belonging to the group.

In the case of grouping the plural devices, the grouping may be performed for each region where the devices are located. For example, the devices may be grouped for each region of Hokkaido, Tohoku, Kanto, Hokuriku, Kansai, Chugoku, Shikoku, and Kyushu, a reference of the service contract situation may be provided in each group, and the installation, deletion, and update of the application may be managed on the group unit. Accordingly, it is possible to manage the installation, deletion, and update of application in accordance with characteristics of the region even in the contract situation of the same service.

In the present exemplary embodiment, in the software management system 12, all of the application to be installed, the application to be deleted, and the application to be updated in the device 10 are extracted, and at least one of the application to be installed, the application to be deleted, and the application to be updated in the device 10 may be extracted. For example, only the application to be installed in the device 10 may be extracted. The user who is the administrator may set which application to extract.

In the present exemplary embodiment, the application to be installed, the application to be deleted, and the application to be updated in the software management system 12 may be extracted at a preset timing. For example, the job is received and executed every Saturday at 1:00 am. Execution timing may also be set by the user using the user terminal.

Further, in the present exemplary embodiment, in a case where the application to be installed, the application to be deleted, or the application to be updated is automatically extracted in the software management system 12, it may be selected whether to automatically execute the job or only to notify the user terminal. For example, depending on the type of the application,
Application to be installed:
   Installation, or Notification only
Application to be deleted:
   Delete, Not-display, or Notification only
Application to be updated:
   Update, or Notification only,
   may be selected. It should be noted that the application to be deleted includes an aspect in which the application is not displayed on the operation panel of the device 10 without actually being deleted, in other words, the application is inoperable.

As a result, even if the contract situation of the user changes and the application to be deleted changes to the application to be installed, it is not necessary to newly download and install the application, and it may be easily dealt with simply by changing the non-display to the display.

In the present exemplary embodiment, the application to be installed may be extracted in accordance with the number of remaining licenses for the application that is license managed for each device. Specifically, when the application to be installed is extracted for ten devices, the number of licenses of the application is limited, and when the number of the remaining licenses is eight, the installation of the application is executed on the specific eight devices among the ten devices. Of course, even if the application to be installed is extracted, when the number of the remaining licenses of the application is 0, the application is excluded from the application to be installed.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device). In the embodiments above, the term "processor" is broad enough to encompass one processor or plural processors in collaboration which are located physically apart from each other but may work cooperatively. The order of operations of the processor is not limited to one described in the embodiments above, and may be changed.

## Claims

1. An information processing system, comprising:
a device (10) used by a user in accordance with a service use situation of the user;
the system **characterized by** further comprising an information processing apparatus comprising a first processor (20) configured to:
group a plurality of users registered as users of the device into a use group;
acquire service contract situation of the users belonging to the use group;
acquire installed application information of the device (10);
specify an application which is not required for a service contracted by any user belonging to the use group as an application to be deleted from the device (10), according to the installed application information and the service contract situation of the users belonging to the use group; and
transmit execution instructions of deleting the application to the device (10).

2. The information processing system according to claim 1, wherein
the device (10) comprises a second processor configured to:
periodically and automatically acquire the job of deleting the application specified by the information processing apparatus, and
automatically execute the acquired job.

3. The information processing system according to claim 1 or claim 2, comprising a plurality of devices (10) each configured to provide a service to a user by an application installed in the device (10), wherein
the information processing apparatus is configured to:
group the plurality of devices (10) into groups; and
specify the application to be deleted from the device (10), for all devices (10) belonging to the same group.

4. A program comprising instructions which, when the program is executed by a computer, cause the computer to carry out a process for specifying an application to be deleted in a device (10) used by a user in accordance with a service use situation of the user, the process comprising:
acquiring the service contract situation of a plurality of users;
acquiring installed application information in the device (10) that provides a service to the user;
**characterized in that** the process further comprises:
grouping the plurality of users registered as users of the device into a use group,
specifying an application which is not required for a service contracted by any user belonging to the use group as the application to be deleted from the device (10), according to the installed application information and the service contract situation of the users belonging to the use group, and
transmitting execution instructions of deleting the application to the device (10).

5. An information processing method for specifying an application to be deleted in a user device (10) in accordance with a service use situation of the user, the method comprising:
acquiring the service contract situation of a plurality of users;
acquiring installed application information in the user device (10) that provides a service to the user;
**characterized in that** the method further comprises:
grouping the plurality of users registered as users of the device into a use group,
specifying an application which is not required for a service contracted by any user belonging to the use group as the application to be deleted from the device (10), according to the installed application information and the service contract situation of the users belonging to the use group, and
transmitting execution instructions of deleting the application to the device (10).

## Patentansprüche

1. Informationsverarbeitungssystem, umfassend:
eine Vorrichtung (10), die von einem Benutzer in Übereinstimmung mit einer Dienstnutzungssituation des Benutzers verwendet wird;
wobei das System **dadurch gekennzeichnet ist, dass** es ferner eine Informationsverarbeitungsvorrichtung umfasst, die einen ersten Prozessor (20) umfasst, der so konfiguriert ist, dass er:
mehrere Benutzer, die als Benutzer der Vorrichtung registriert sind, in eine Verwendungsgruppe gruppiert;
Dienstvertragssituation der Benutzer, die zu der Verwendungsgruppe gehören, erfasst;
installierte Anwendungsinformationen der Vorrichtung (10) erfasst;
eine Anwendung, die für einen Dienst, der von einem beliebigen Benutzer, der zu der Verwendungsgruppe gehört, vertraglich vereinbart worden ist, nicht erforderlich ist, als eine Anwendung, die von der Vorrichtung (10) zu löschen ist, gemäß den installierten Anwendungsinformationen und der Dienstvertragssituation der Benutzer, die zu der Verwendungsgruppe gehören, spezifiziert; und
Ausführungsanweisungen des Löschens der Anwendung an die Vorrichtung (10) überträgt.

2. Informationsverarbeitungssystem nach Anspruch 1, wobei
die Vorrichtung (10) einen zweiten Prozessor umfasst, der so konfiguriert ist, dass er:
periodisch und automatisch den Auftrag des Löschens der von der Informationsverarbeitungsvorrichtung spezifizierten Anwendung erfasst, und
den erfassten Auftrag automatisch ausführt.

3. Informationsverarbeitungssystem nach Anspruch 1 oder Anspruch 2, das mehrere Vorrichtungen (10) umfasst, die jeweils so konfiguriert sind, dass sie einem Benutzer einen Dienst durch eine in der Vorrichtung (10) installierte Anwendung bereitstellen, wobei
die Informationsverarbeitungsvorrichtung so konfiguriert ist, dass sie:
die mehreren Vorrichtungen (10) in Gruppen gruppiert; und
die von der Vorrichtung (10) zu löschende Anwendung für alle Vorrichtungen (10), die zu derselben Gruppe gehören, spezifiziert.

4. Programm, das Anweisungen umfasst, die, wenn das Programm von einem Computer ausgeführt wird, den Computer veranlassen, einen Prozess zum Spezifizieren einer Anwendung, die in einer Vorrichtung (10), die von einem Benutzer verwendet wird, zu löschen ist, in Übereinstimmung mit einer Dienstnutzungssituation des Benutzers durchzuführen, wobei der Prozess umfasst:
Erfassen der Dienstvertragssituation mehrerer Benutzer;
Erfassen von installierten Anwendungsinformationen in der Vorrichtung (10), die dem Benutzer einen Dienst bereitstellt;
**dadurch gekennzeichnet, dass** der Prozess ferner umfasst:
Gruppieren der mehreren Benutzer, die als Benutzer der Vorrichtung registriert sind, in eine Verwendungsgruppe,
Spezifizieren einer Anwendung, die für einen Dienst, der von einem beliebigen Benutzer, der zu der Verwendungsgruppe gehört, vertraglich vereinbart worden ist, nicht erforderlich ist, als die von der Vorrichtung (10) zu löschende Anwendung, gemäß den installierten Anwendungsinformationen und der Dienstvertragssituation der Benutzer, die zu der Verwendungsgruppe gehören, und
Übertragen von Ausführungsanweisungen des Löschens der Anwendung an die Vorrichtung (10).

5. Informationsverarbeitungsverfahren zum Spezifizieren einer Anwendung, die in einer Benutzervorrichtung (10) zu löschen ist, in Übereinstimmung mit einer Dienstnutzungssituation des Benutzers, wobei das Verfahren umfasst:
Erfassen der Dienstvertragssituation mehrerer Benutzer;
Erfassen von installierten Anwendungsinformationen in der Benutzervorrichtung (10), die dem Benutzer einen Dienst bereitstellt;
**dadurch gekennzeichnet, dass** das Verfahren ferner umfasst:
Gruppieren der mehreren Benutzer, die als Benutzer der Vorrichtung registriert sind, in eine Verwendungsgruppe,
Spezifizieren einer Anwendung, die für einen Dienst, der von einem beliebigen Benutzer, der zu der Verwendungsgruppe gehört, vertraglich vereinbart worden ist, nicht erforderlich ist, als die von der Vorrichtung (10) zu löschende Anwendung, gemäß den installierten Anwendungsinformationen und der Dienstvertragssituation der Benutzer, die zu der Verwendungsgruppe gehören, und
Übertragen von Ausführungsanweisungen des Löschens der Anwendung an die Vorrichtung (10).

## Revendications

1. Système de traitement d'informations, comprenant :
un dispositif (10) utilisé par un utilisateur en fonction d'une situation d'utilisation de service de l'utilisateur ;
le système **caractérisé en ce qu'**il comprend en outre un appareil de traitement d'informations comprenant un premier processeur (20) configuré pour :
grouper une pluralité d'utilisateurs enregistrés en tant qu'utilisateurs du dispositif en un groupe d'utilisation ;
acquérir une situation de contrat de service des utilisateurs appartenant au groupe d'utilisation ;
acquérir des informations sur les applications installées sur le dispositif (10) ;
spécifier une application qui n'est pas requise pour un service souscrit par un utilisateur appartenant au groupe d'utilisation comme une application à supprimer du dispositif (10), en fonction des informations sur les applications installées et de la situation de contrat de service des utilisateurs appartenant au groupe d'utilisation ; et
transmettre des instructions d'exécution de suppression de l'application au dispositif (10).

2. Système de traitement d'informations selon la revendication 1, dans lequel
le dispositif (10) comprend un deuxième processeur configuré pour :
acquérir périodiquement et automatiquement la tâche de suppression de l'application spécifiée par l'appareil de traitement d'informations, et
exécuter automatiquement la tâche acquise.

3. Système de traitement d'informations selon la revendication 1 ou la revendication 2, comprenant une pluralité de dispositifs (10), chacun configuré pour fournir un service à un utilisateur par une application installée dans le dispositif (10), dans lequel
l'appareil de traitement d'informations est configuré pour :
grouper la pluralité de dispositifs (10) en groupes ; et
spécifier l'application à supprimer du dispositif (10), pour tous les dispositifs (10) appartenant au même groupe.

4. Programme comprenant des instructions qui, lorsque le programme est exécuté par un ordinateur, amènent l'ordinateur à effectuer un processus pour spécifier une application à supprimer dans un dispositif (10) utilisé par un utilisateur en fonction d'une situation d'utilisation de service de l'utilisateur, le processus comprenant :
acquérir la situation de contrat de service d'une pluralité d'utilisateurs ;
acquérir des informations sur les applications installées dans le dispositif (10) qui fournit un service à l'utilisateur ;
**caractérisé en ce que** le processus comprend en outre :
grouper la pluralité d'utilisateurs enregistrés en tant qu'utilisateurs du dispositif en un groupe d'utilisation,
spécifier une application qui n'est pas requise pour un service souscrit par un utilisateur appartenant au groupe d'utilisation comme l'application à supprimer du dispositif (10), en fonction des informations sur les applications installées et de la situation de contrat de service des utilisateurs appartenant au groupe d'utilisation, et
transmettre des instructions d'exécution de suppression de l'application au dispositif (10).

5. Procédé de traitement d'informations pour spécifier une application à supprimer dans un dispositif utilisateur (10) en fonction d'une situation d'utilisation de service de l'utilisateur, le procédé comprenant :
acquérir la situation de contrat de service d'une pluralité d'utilisateurs ;
acquérir des informations sur les applications installées dans le dispositif utilisateur (10) qui fournit un service à l'utilisateur ;
**caractérisé en ce que** le procédé comprend en outre :
grouper la pluralité d'utilisateurs enregistrés en tant qu'utilisateurs du dispositif en un groupe d'utilisation,
spécifier une application qui n'est pas requise pour un service souscrit par un utilisateur appartenant au groupe d'utilisation comme l'application à supprimer du dispositif (10), en fonction des informations sur les applications installées et de la situation de contrat de service des utilisateurs appartenant au groupe d'utilisation, et
transmettre des instructions d'exécution de suppression de l'application au dispositif (10).
